# EUROPEAN PATENT APPLICATION

(11) **EP 4 733 555 A1**
(43) Date of publication of application: **29.04.2026**
(21) Application number: 25206753.3
(22) Date of filing: 06.10.2025
(51) Int. Cl.: F01K 17/06

(54) **SYSTEM AND METHOD OF HEAT INTEGRATION FOR A GAS CAPTURE SYSTEM**

(30) Priority: 23.10.2024 US 202418924938
(71) Applicant: GE Vernova Technology GmbH, 5400 Baden (CH)
(72) Inventor: NAGUMANTRI, Raman Venkata Satya Lova, 560087 Bangalore (IN); MURPHY, Peter John, Henrico, 23233 (US); MANDAPAKA, Suresh Venkata Jogi Janaki, Karnataka, 560037 (US); RAMESH, Anantha, 560072 Bengaluru (IN); KARUPPASAMY, Saravanakumar, 639120 Karur (IN)
(74) Representative: Freigutpartners IP Law Firm

(57) **Abstract**

A system includes a fuel heating system having a first heat exchanger. The first heat exchanger is fluidly coupled to a steam turbine system, a gas turbine system, a carbon capture system, and a heat recovery steam generator (HRSG). The first heat exchanger is configured to receive steam from the HRSG, the steam turbine system, or a combination thereof. The first heat exchanger is also configured to receive a fuel. The first heat exchanger is also configured to place the steam in a first heat exchange relationship with the fuel to produce a first heated fuel and a first cooled steam. The first heat exchanger is also configured to send the first cooled steam to the carbon capture system. The first heat exchanger is also configured to send the first heated fuel to the gas turbine system, a duct burner, or a combination thereof.

## Description

### BACKGROUND

The subject matter disclosed herein generally relates to a system and method for improving efficiency of an industrial plant having a combustion system and a gas treatment system.

Various undesirable gases pollute the atmosphere. For example, the undesirable gases may include carbon oxides (CO_{X}) such as carbon dioxide (CO₂) and carbon monoxide (CO), nitrogen oxides (NOx) such as nitrogen dioxide (NO₂), and/or sulfur oxides (SOx) such as sulfur dioxide (SO₂). With various regulations and environmental concerns regarding global warming, it would be desirable to reduce the undesirable gases (e.g., CO₂) in the atmosphere. An industrial plant may include a combined cycle system having a gas turbine system generating exhaust gas from combustion of a fuel, a heat recovery steam generator configured to generate steam from heat of the exhaust gas, and a steam turbine system driven by the steam. The combined cycle system may include a gas treatment system for reducing the undesirable gases; however, the gas treatment system may add costs and reduce efficiency of the plant. As such, there is a need for improving the efficiency of the gas treatment system used in the combined cycle system to remove undesirable gases from the atmosphere and/or from exhaust gases discharged into the atmosphere while maintaining an efficiency of remaining subsystems used in combined cycle system.

### BRIEF DESCRIPTION

Certain embodiments commensurate in scope with the originally claimed subject matter are summarized below. These embodiments are not intended to limit the scope of the claimed embodiments, but rather these embodiments are intended only to provide a brief summary of possible forms of the subject matter. Indeed, the presently claimed embodiments may encompass a variety of forms that may be similar to or different from the embodiments set forth below.

In certain embodiments, a system includes a fuel heating system having a first heat exchanger. The first heat exchanger is fluidly coupled to a steam turbine system, a gas turbine system, a carbon capture system, and a heat recovery steam generator (HRSG). The first heat exchanger is configured to receive steam from the HRSG, the steam turbine system, or a combination thereof. The first heat exchanger is also configured to receive a fuel. The first heat exchanger is also configured to place the steam in a first heat exchange relationship with the fuel to produce a first heated fuel and a first cooled steam. The first heat exchanger is also configured to send the first cooled steam to the carbon capture system. The first heat exchanger is also configured to send the first heated fuel to one or more fuel injection locations of the gas turbine system, a duct burner of the HRSG, or a combination thereof.

In certain embodiments, a system includes a gas turbine system, a heat recovery steam generator (HRSG), a steam turbine system, a carbon capture system, and a fuel heating system. The fuel heating system includes a first heat exchanger. The first heat exchanger is configured to receive steam from the HRSG, the steam turbine system, or a combination thereof. The first heat exchanger is also configured to receive a fuel. The first heat exchanger is also configured to transfer heat from the steam to the fuel to produce a first heated fuel and a first cooled steam. The first heat exchanger is also configured to send the first cooled steam to the carbon capture system. The first heat exchanger is also configured to send the first heated fuel to one or more fuel injections locations of the gas turbine system, a duct burner of the HRSG, or a combination thereof.

In certain embodiments, a method includes receiving steam from a heat recovery steam generator (HRSG), a steam turbine system, or a combination thereof, into at least one heat exchanger of a fuel heating system. The method also includes receiving a fuel into the at least one heat exchanger. The method also includes transferring heat from the steam to the fuel in the at least one heat exchanger to produce a heated fuel and a cooled steam. The method also includes sending the cooled steam to a carbon capture system. The method also includes sending the heated fuel to one or more fuel injection locations of a gas turbine system, a duct burner of the HRSG, or a combination thereof.

### BRIEF DESCRIPTION OF THE DRAWINGS

These and other features, aspects, and advantages of the presently disclosed techniques will become better understood when the following detailed description is read with reference to the accompanying drawings in which like characters represent like parts throughout the drawings, wherein:
FIG. 1 is a block diagram of an embodiment of a combined cycle system having a fuel heating system, in accordance with embodiments described herein;
FIG. 2 is a block diagram of an embodiment of a combined cycle system having a fuel heating system having a heat exchanger, in accordance with embodiments described herein;
FIG. 3 is a block diagram of an embodiment of a combined cycle system having a fuel heating system having two heat exchangers in a series configuration, in accordance with embodiments described herein;
FIG. 4 is a block diagram of an embodiment of a combined cycle system having a fuel heating system having two heat exchangers in a parallel configuration, in accordance with embodiments described herein;
FIG. 5 is a block diagram of an embodiment of a steam turbine having a plurality of tap-off locations for transferring steam to the fuel heating system, in accordance with embodiments described herein; and
FIG. 6 is an embodiment of a process for operating the fuel heating system, in accordance with embodiments described herein.

### DETAILED DESCRIPTION

One or more specific embodiments of the presently disclosed systems and methods are described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the presently disclosed embodiments, the articles "a," "an," "the," and "said" are intended to mean that there are one or more of the elements. The terms "comprising," "including," and "having" are intended to be inclusive and mean that there may be additional elements other than the listed elements.

The present disclosure is generally directed towards a fuel heating system for an industrial plant having a combined cycle system. The fuel heating system receives steam from a heat recovery steam generator (HRSG), a steam turbine system, or a combination thereof. The fuel heating system also receives a fuel (e.g., natural gas, hydrogen, methane, gasoline, diesel, etc.) from a fuel source. The fuel heating system places the steam in a heat exchange relationship with the fuel and transfers heat from the steam to the fuel, thereby producing heated fuel and cooled steam. The fuel heating system sends the heated fuel to a gas turbine system of the combined cycle system, a duct burner, or a combination thereof. The fuel heating system sends the cooled steam to a carbon capture system of the combined cycle system. As disclosed herein, the fuel heating system may include one or more heat exchangers. In embodiments of the fuel heating system having two or more heat exchangers, the heat exchangers may be arranged in a series configuration or in a parallel configuration relative to a flow of the fuel and the steam, as described herein. The fuel heat system may eliminate the need for an attemperator otherwise used to attemperate the steam for use in the carbon capture system, and thus the fuel heating system serves dual purposes of both heating the fuel and also attemperating the steam for the carbon capture system.

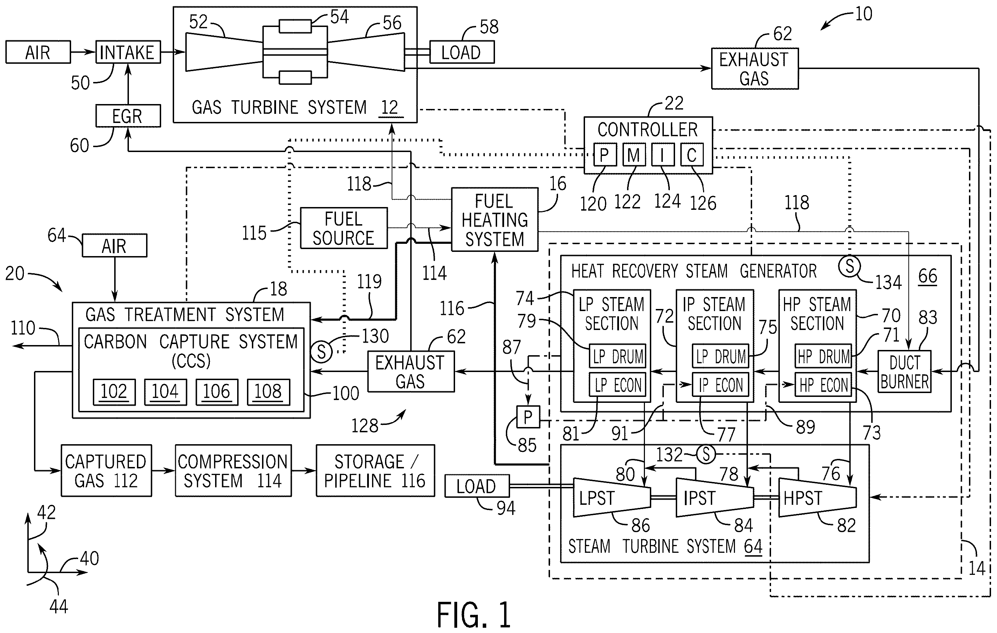

With the foregoing in mind, FIG. 1 is a block diagram of an embodiment of an industrial plant 10 having a gas turbine system 12, an energy recovery system 14, a fuel heating system 16, a gas treatment system 18 having one or more gas capture systems 20, and a controller 22 coupled to each of the systems 12, 14, 16, and 18. As discussed below, the one or more gas capture systems 20 of the gas treatment system 18 are configured to capture an undesirable gas (e.g., CO₂) from exhaust gas and/or air (e.g., direct air capture). The gas capture system 20 of the industrial plant 10 includes a carbon capture system 100 for use in capturing undesirable gases (e.g., CO₂) from the exhaust gas of the combustion systems, air from the atmosphere, or a combination thereof. It should be noted that the gas capture system 20 (e.g., carbon capture system 100) may not be necessarily coupled to the gas treatment system 12. In certain embodiments, the carbon capture system 100 may be independent or separate from the industrial plant 10, such as a standalone carbon capture system 100 used for direct air capture. Furthermore, the carbon capture system 100 also includes a heating source and a cooling source. Before discussing details of the gas treatment system 18, various aspects of the industrial plant 10 are discussed in further detail. For purposes of orientation in the drawings, reference may be made to an axial direction or axis 40, a radial direction or axis 42 extending radially away from the axial direction or axis 40, and a circumferential direction or axis 44 extending circumferentially around the axial direction or axis 40. The directions or axes 40, 42, and 44 may be in reference to a rotational axis 36 of the gas turbine system 12, for example.

The gas turbine system 12 includes an air intake 50, a compressor 52 having one or more compressor stages, one or more combustors 54, a turbine 56 having one or more turbine stages, and a load 58 (e.g., electrical generator) driven by the turbine 56. In certain embodiments, the gas turbine system 12 further includes an exhaust gas recirculation (EGR) system 60 configured to recirculate an exhaust gas 62 into the air intake 50. The recirculated exhaust gas 62 helps to reduce the temperature and formation of certain emissions (e.g., nitrogen oxides (NO_{X})) associated with combustion in the combustors 54. In operation, the compressor 52 receives air (and also exhaust gas 62 if the EGR system 60 is active) from the air intake 50, and compresses the air and/or exhaust gas 62 in one or more compressor stages (e.g., stages of rotating compressor blades). The combustors 54 then combust fuel from a fuel supply system with the compressed air and/or exhaust gas, and generate hot combustion gases. The hot combustion gases expand and drive one or more turbine stages (e.g., stages of rotating turbine blades) in the turbine 56, thereby driving rotation of the compressor 52 and the load 58 via shafts. The turbine 56 then outputs the hot combustion gases as the exhaust gas 62. The gas turbine system 12 may include a variety of piping to support the flow of intake air, compressed air (e.g., bleed air), one or more fuels (e.g., liquid fuel, gas fuel, etc.), additives for combustion, exhaust gas (e.g., exhaust gas recirculation), or other fluids.

The energy recovery system 14 includes a steam turbine system 64 and a heat recovery steam generator (HRSG) 66. The HRSG 66 recovers waste heat from the exhaust gas 62 to generate steam for driving the steam turbine system 64. The HRSG 66 includes a high-pressure (HP) steam section 70, an intermediate-pressure (IP) steam section 72, and a low-pressure (LP) steam section 74 configured to generate HP steam 76, IP steam 78, and LP steam 80. As shown, the HP steam section 70 includes an HP drum 71 and an HP economizer 73, the IP steam section 72 includes an IP drum 75 and an IP economizer 77, and the LP steam section 74 includes an LP drum 79 and an LP economizer 81. As shown, the HRSG 66 includes a duct burner 83 configured to heat the exhaust gas 62 entering the HRSG 66. The duct burner 83 combusts a fuel with an oxidant (e.g., oxygen, air, etc.) in the exhaust gas 62, thereby adding heat to the exhaust gas 62 prior to heat recovery from the exhaust gas 62 in the HRSG 66. As shown, a pump 85 receives feedwater 87 from the LP drum 79. The pump 85 pumps the feedwater 87 to the HP economizer 73 via a first line 89. The pump 85 also pumps the feedwater 87 to the IP economizer 77 via a second line 91.

As shown, the steam turbine system 64 may include an HP steam turbine 82 driven by the HP steam 76, an IP steam turbine 84 driven by the IP steam 78, and a LP steam turbine 86 driven by the LP steam 80. In addition to the steam provided by the HRSG 66, the HP steam turbine 82 provides IP steam to the IP steam turbine 84, and the IP steam turbine 84 provides LP steam to the LP steam turbine 86. In operation, the steam turbine system 64 drives a load 94 (e.g., electrical generator) via a shaft. In certain embodiments, the steam turbine system 64 and/or the HRSG 66 may provide heated water and/or steam (e.g., HP steam 76, IP steam 78, and/or LP steam 80) to the gas treatment system 18 to support a desorption mode of the one or more gas capture systems 20. For example, the gas capture systems 20 may receive heated water and/or steam in a temperature range of 100 to 150 degrees Celsius, 110 to 150 degrees Celsius, 120 to 150 degrees Celsius, or 130 to 150 degrees Celsius. The steam turbine system 64 and the HRSG 66 may include a variety of piping to support the flow of exhaust gas, steam, water, or other fluids, thereby facilitating waste heat recovery, steam generation, and steam power.

After the HRSG 66, the exhaust gas 62 may flow to the EGR system 60 and/or the gas treatment system 18. In the illustrated embodiment, the exhaust gas 62 flows through one or more gas capture systems 20 configured to capture undesirable gases. In some embodiments, the gas capture systems 20 may receive air 96 from an additional source (e.g., environment, fans, and the like). For example, the air 96 may be atmospheric air when the gas capture system 20 is configured as a direct air capture (DAC) system. The undesirable gases from the exhaust gas 62 and/or the air 96 may include carbon oxides (COx) (e.g., carbon dioxide (CO₂) and carbon monoxide (CO)), nitrogen oxides (NOx) (e.g., nitrogen dioxide (NO₂)), sulfur oxides (SO_{X}) (e.g., sulfur dioxide (SO₂)), or any combination thereof. In the following discussion, CO₂ may be used as an example of the undesirable gases; however, the gas capture systems 20 may be designed to capture any of the foregoing undesirable gases. For example, the gas capture systems 20 include one or more carbon capture systems 100 (e.g., CO₂ capture systems).

In some embodiments, the gas capture systems 20 (e.g., carbon capture systems 100) may include sorbent-based gas capture systems, solvent-based gas capture systems, cryogenic gas capture systems, or any combination thereof, configured to remove and capture undesirable gases. The carbon capture system 100 may include components 102, 104, 106, and 108 configured to enable gas capture of undesirable gases (e.g., CO₂) from the exhaust gas 62, thereby outputting a treated gas 110 and a captured gas 112 (e.g., CO₂).

In the illustrated embodiment, the fuel heating system 16 receives a fuel 114 (e.g., from a fuel source 115). The fuel 114 may include natural gas, liquid natural gas, hydrogen blends, syngas, methane, or a combination thereof. The fuel heating system 16 also receives steam 116 from the energy recovery system 14. The steam 116 may be received (e.g., extracted, bled or siphoned) from the steam turbine system 64 and/or the HRSG 66. As discussed in further detail herein, the fuel heating system 16 places the fuel 114 in a heat exchange relationship with the steam 116 to produce a heated fuel 118 and a cooled steam 119. The heat exchange relationship may include one or more heat exchangers (e.g., indirect heat exchanger, shell and tube heat exchanger, printed circuit heat exchanger, etc.) for an indirect heat transfer between the fuel 114 and the steam 116. In certain embodiments, the heat exchange relationship (e.g., heat exchangers) may eliminate an attemperator used to cool the steam 116, wherein the attemperator removes heat from the steam 116 but does not use the heat for any other purpose (e.g., wasted heat). As shown, the fuel heating system 16 sends the heated fuel 118 to the gas turbine system 12 (e.g., combustors 54) and/or the duct burners 83. The fuel heating system 16 also sends the cooled steam 119 to the carbon capture system 100. Thus, in the illustrated embodiment, the heat exchange relationship (e.g., heat exchangers) advantageously provides heat integration (e.g., heat transfer) between the fuel heating system 116, the energy recovery system 14, and the gas capture system 20 (e.g., carbon capture system 100), thereby using otherwise wasted heat by integrating the systems 116, 14, and 20.

In the illustrated embodiment, the controller 22 is configured to control all aspects of the industrial plant 10. The controller 22 includes one or more processors 120, memory 122, instructions 124 stored on the memory 122 and executable by the processor 120, and communication circuitry 126 configured to communicate with sensors and various equipment of the industrial plant 10. For example, the controller 22 is configured to receive sensor feedback from one or more sensors 128 coupled to the gas turbine system 12, the steam turbine system 64, the HRSG 66, and the gas treatment system 18 (e.g., gas capture systems 20), and/or additional components of the industrial plant 10 and control the same equipment based on the sensor feedback, operating modes, user input, computer models, or any combination thereof. The sensors 128 may include temperature sensors, pressure sensors, flow rate sensors, gas composition sensors, or any combination thereof.

In the illustrated embodiment, the gas capture systems 20 may include one or more sensors 128 communicatively coupled to the controller 22. The one or more sensors 128 may be configured to measure one or more parameters associated with the cooled steam 119 entering the carbon capture system 100 from the fuel heating system 16. In certain embodiments, the one or more sensors 128 may measure a pressure, temperature, flowrate, or a combination thereof associated with the cooled steam 119. In certain embodiments, the controller 22 may control a parameter associated with the fuel 114 and/or the steam 116 sent to the fuel heating system 16 in response to a change in one or more estimated parameters of the cooled steam 119 based on a signal received by the controller 22 from the one or more sensors 128.

Additionally or alternatively, the steam turbine system 64 may include one or more sensors 130 communicatively coupled to the controller 22. The one or more sensors 130 may be configured to measure one or more parameters of the cooled steam 119 entering the gas treatment system 18. For example, the one or more sensors 130 may measure a pressure, a temperature, a flow rate, a steam saturation, or any combination thereof, of the cooled steam 119. Additionally or alternatively, the HRSG 66 may include one or more sensors 132 communicatively coupled to the controller 22. The one or more sensors 132 may be configured to measure one or more parameters of the steam 116 sent to the fuel heating system 16. For example, the one or more sensors 132 may measure a pressure, a temperature, a flow rate, a steam saturation, or any combination thereof, of the steam 116.

In certain embodiments, the controller 22 may be configured to control a temperature of the heated fuel 118 to be within a temperature threshold (e.g., upper and lower temperature thresholds) and a temperature of the cooled steam 119 to be within a temperature threshold (e.g., upper and lower temperature thresholds) by controlling the heat exchange in the fuel heating system 16, such as by controlling sensed parameters of the steam 116 supplied into the fuel heating system 16 for heat transfers with the fuel 114 supplied into the fuel heating system 16. For example, the controller 22 may selectively control one or more valves on steam extraction conduits to control the steam extraction locations from the steam turbine system 64 and/or the HRSG 66, thereby selectively controlling properties of the steam 116 (e.g., temperature, pressure, flow rate, steam saturation, etc.) being supplied to the fuel heating system 16. For example, the controller 22 may selectively open valves to enable a flow of LP steam from the steam turbine system 64 and/or the HRSG 66 if a low level of heating is needed for the fuel 114, the controller 22 may selectively open valves to enable a flow of IP steam from the steam turbine system 64 and/or the HRSG 66 if an intermediate level of heating is needed for the fuel 114, and/or the controller 22 may selectively open valves to enable a flow of HP steam from the steam turbine system 64 and/or the HRSG 66 if a high level of heating is needed for the fuel 114. The fuel heating system 16 may provide heat transfer between the fuel 114 and the steam 116 via one or more heat exchangers as discussed in further detail below.

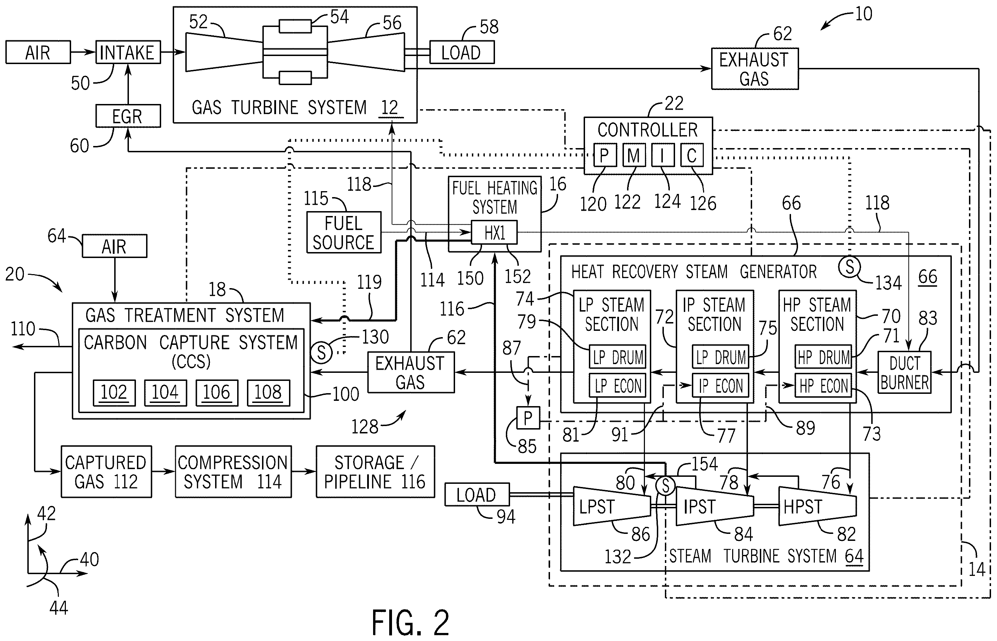

FIG. 2 is a block diagram of an embodiment of the industrial plant 10 having a fuel heating system 16 that includes a heat exchanger 150 (e.g., first heat exchanger 152). In the illustrated embodiment, the first heat exchanger 152 is fluidly coupled to the gas turbine system 12, the steam turbine system 64, the HRSG 66, the carbon capture system 100, and the fuel source 115. In certain embodiments, the first heat exchanger 152 includes an indirect heat exchanger, such as a shell and tube heat exchanger, a coil heat exchanger, a printed circuit heat exchanger, or the like. The controller 22 is configured to control the heat exchange in the first heat exchanger 152 by controlling flow rates and residence times, temperatures, pressures, and other properties of the fuel 114 and steam 116 exchanging heat therein, thereby controlling temperatures of the heated fuel 118 and the cooled steam 119 within temperature thresholds (e.g., upper and lower temperature thresholds).

As shown, the first heat exchanger 152 receives the fuel 114 (e.g., from fuel source 115). The fuel 114 may include natural gas, liquid natural gas, hydrogen blends, syngas, methane, or a combination thereof. The first heat exchanger 152 also receives the steam 116 from the energy recovery system 14. The steam 116 may be received (e.g., extracted, bled or siphoned) from one or more extraction locations in the steam turbine system 64 and/or the HRSG 66. In the illustrated embodiment, the steam 116 is received from an extraction location along a cross-over line 154 fluidly coupled to the LP steam turbine 86 and the IP steam turbine 84. Additionally or alternatively, the steam 116 may be received from one or more additional extraction locations throughout the HRSG 66 and/or the steam turbine system 64. For example, the extraction locations may include one or more of the HP steam section 70, the IP steam section 72, the LP steam section 74, any connections between the sections 70, 72, and 74, or any combination thereof, of the HRSG 66. By further example, the extraction locations may include one or more of the HP steam turbine 82, the IP steam turbine 84, the LP steam turbine 86, any connections between the steam turbines 82, 84, and 86, or any combination thereof, of the steam turbine system 64. Thus, the illustrated extraction location is merely for illustration purposes, and is not intended to limit the extraction locations for the disclosed embodiments. Any discuss of extraction locations is intended to include any one, multiple, or all of the extraction locations in the HRSG 66 and the steam turbine system 64. As appreciated, each of the extraction locations may include a fluid conduit (e.g., line, pipe, or duct) having one or more valves coupled to the controller 22, which controls the valves for flow control of the steam from the various extraction locations.

The first heat exchanger 152 places the fuel 114 in a heat exchange relationship with the steam 116 to produce a heated fuel 118 and a cooled steam 119. As shown, the first heat exchanger 152 sends the heated fuel 118 to the gas turbine system 12 (e.g., combustors 54) and/or the duct burners 83. In certain embodiments, the heated fuel 118 may be sent to the combustors 54 and/or one or more injection locations of the gas turbine system 12 (e.g., for reheating the combustion gases). The first heat exchanger 152 also sends the cooled steam 119 to the carbon capture system 100. In certain embodiments, the first heat exchanger 152 may heat the fuel 114 to a temperature at least equal to or greater than 290, 295, 300, 305, or 310 degrees Celsius. Additionally, the first heat exchanger 152 may cool the steam 116 to a temperature suitable for the desorption mode in the carbon capture system 100, such as 100 to 150 degrees Celsius, 110 to 150 degrees Celsius, 120 to 150 degrees Celsius, or 130 to 150 degrees Celsius. However, the particular temperature ranges may vary depending on the gas turbine system 12, duct burner 82, and carbon capture system 100. Again, as noted above, the first heat exchanger 152 simultaneously heats the fuel 114 and cools the steam 116, rather than using separate systems to heat the fuel 114 and cool the steam 116. In other words, the first heat exchanger 152 may eliminate a separate fuel heater to heat the fuel 114 and a separate attemperator to cool the steam 116, thereby reducing the number of components, reducing the amount of wasted heat, and increasing efficiency of the industrial plant 10.

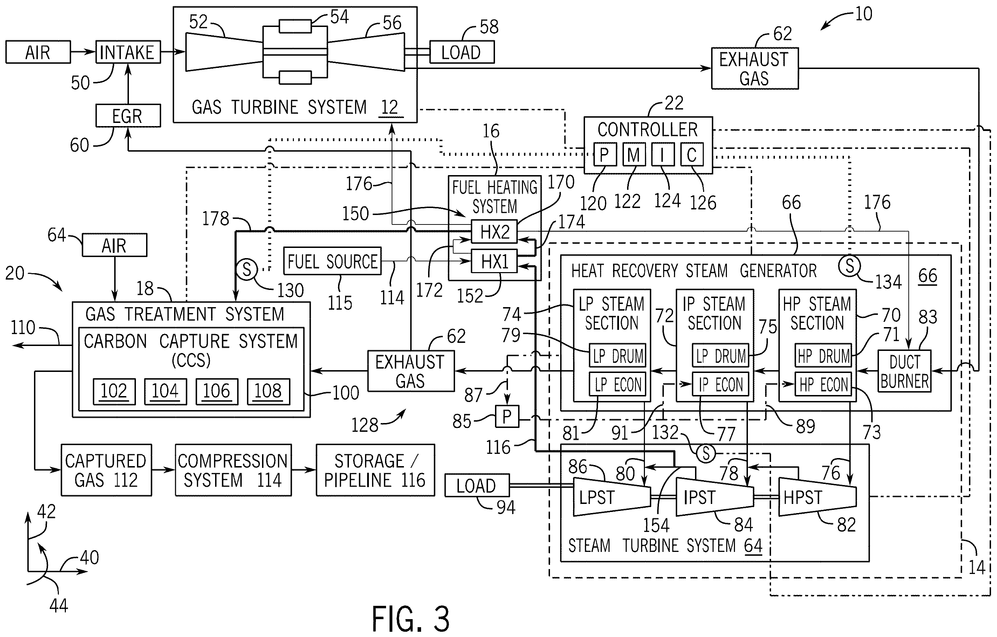

FIG. 3 is a block diagram of the industrial plant 10 having a fuel heating system 16 having a plurality of heat exchangers 150 (e.g., first heat exchanger 152, second heat exchanger 170) in a series flow arrangement. Although FIG. 3 shows two heat exchangers 150, certain embodiments of the fuel heating system 16 may include, 2, 3, 4, 5, or more heat exchangers 150 in the series flow arrangement. In the illustrated embodiment, the first heat exchanger 152 is fluidly coupled to the steam turbine system 64, the fuel source 115, and the second heat exchanger 170, and the second heat exchanger 170 is fluidly coupled to the first heat exchanger 152, the HRSG 66, the carbon capture system 100, and the gas turbine system 12 (e.g., the combustors 54, one or more injection locations). In certain embodiments, the first heat exchanger 152, the second heat exchanger 170, or a combination thereof includes an indirect heat exchanger, such as a shell and tube heat exchanger, a coil heat exchanger, or the like. The controller 22 is configured to control the heat exchange in the first and second heat exchangers 152 and 170 by controlling flow rates and residence times, temperatures, pressures, and other properties of the fuel 114 and steam 116 exchanging heat therein, thereby controlling temperatures of the heated fuel and the cooled steam within temperature thresholds (e.g., upper and lower temperature thresholds).

As shown, the first heat exchanger 152 receives the fuel 114 (e.g., from a fuel source). The fuel 114 may include natural gas, liquid natural gas, hydrogen blends, syngas, methane, or a combination thereof. The first heat exchanger 152 also receives the steam 116 from the energy recovery system 14. The steam 116 may be received (e.g., extracted, bled or siphoned) from one or more extraction locations in the steam turbine system 64 and/or the HRSG 66. In the illustrated embodiment, the steam 116 is received from an extraction location along the cross-over line 154 fluidly coupled to the LP steam turbine 86 and the IP steam turbine 84. Additionally or alternatively, the steam 116 may be received from one or more additional locations throughout the HRSG 66 and/or the steam turbine system 64. For example, the extraction locations may include one or more of the HP steam section 70, the IP steam section 72, the LP steam section 74, any connections between the sections 70, 72, and 74, or any combination thereof, of the HRSG 66. By further example, the extraction locations may include one or more of the HP steam turbine 82, the IP steam turbine 84, the LP steam turbine 86, any connections between the steam turbines 82, 84, and 86, or any combination thereof, of the steam turbine system 64.

In the illustrated embodiment, the first heat exchanger 152 places the fuel 114 in a first heat exchange relationship with the steam 116 to produce a first-stage heated fuel 172 (e.g., first heated fuel) and a first-stage cooled steam 174 (e.g., first cooled steam). As shown, the first heat exchanger 152 sends the first-stage heated fuel 172 to the second heat exchanger 170. The first heat exchanger 152 also sends the first-stage cooled steam 174 to the second heat exchanger 170.

In the illustrated embodiment, the second heat exchanger 170 receives the first-stage heated fuel 172 from the first heat exchanger 152. The second heat exchanger 170 also receives the first-stage cooled steam 174 from the first heat exchanger 152. That is, the first heat exchanger 152 and the second heat exchanger 170 are arranged in a series flow arrangement relative to the first-stage heated fuel 172 and the first-stage cooled steam 174. The second heat exchanger 170 places the first-stage heated fuel 172 in a second heat exchange relationship with the first-stage cooled steam 174 to produce a second-stage heated fuel 176 (e.g., second heated fuel) and a second-stage cooled steam 178 (e.g., second cooled steam). As shown, the second heat exchanger 170 sends the second-stage heated fuel 176 to the gas turbine system 12 (e.g., combustors 54, one or more injection locations) and/or the duct burners 83. In certain embodiments, the heated fuel 176 may be sent to the combustors 54 and/or one or more injection locations of the gas turbine system 12 (e.g., for reheating the combustion gases). The second heat exchanger 170 also sends the second-stage cooled steam 174 to the carbon capture system 100. In certain embodiments, the first heat exchanger 152 and the second heat exchanger 170 may heat the fuel 114 to a temperature equal to or greater than 290, 295, 300, 305, or 310 degrees Celsius. Additionally, the first and second heat exchangers 152 and 170 may progressively cool the steam 116 to a temperature suitable for the desorption mode in the carbon capture system 100, such as 100 to 150 degrees Celsius, 110 to 150 degrees Celsius, 120 to 150 degrees Celsius, or 130 to 150 degrees Celsius. Again, the illustrated embodiment integrates heating and cooling in the first and second heat exchangers 152 and 170 of the fuel heating system 16, thereby eliminating the need for a separate fuel heater and a separate steam attemperator.

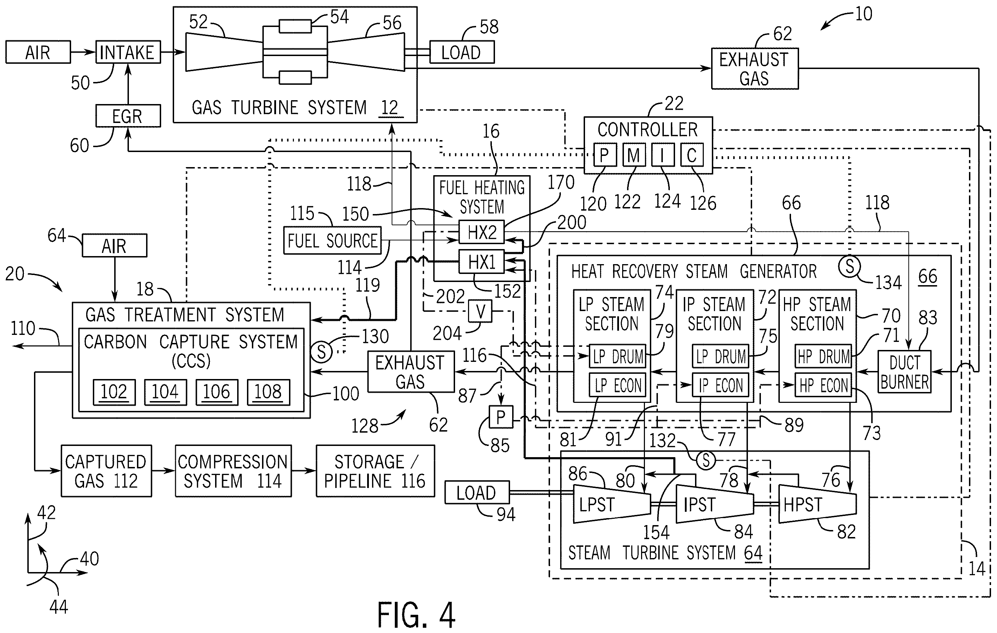

FIG. 4 is a block diagram of the industrial plant 10 having a fuel heating system 16 that includes a plurality of heat exchangers 150 (e.g., first heat exchanger 152, second heat exchanger 170) in a parallel flow arrangement. Although FIG. 4 shows two heat exchangers 150, certain embodiments of the fuel heating system 16 may include, 2, 3, 4, 5, or more heat exchangers 150 in the parallel flow arrangement. In some embodiments, the fuel heating system 16 may include a combination the series flow arrangement of FIG. 3 and the parallel flow arrangement of FIG. 4, and thus the fuel heating systems 16 of FIGS. 3 and 4 are not mutually exclusive in certain embodiments of the fuel heating system 16. In the illustrated embodiment, the first heat exchanger 152 is fluidly coupled to the steam turbine system 64, the HRSG 66, the carbon the second heat exchanger 170, and the carbon capture system 100. The second heat exchanger 170 is fluidly coupled to the fuel source 115, the first heat exchanger 152, the HRSG 66, and the gas turbine system 12 (e.g., the combustors 54). In certain embodiments, the first heat exchanger 152, the second heat exchanger 170, or a combination thereof includes an indirect heat exchanger, such as a shell and tube heat exchanger, a printed circuit heat exchanger, a coil heat exchanger, or the like. The controller 22 is configured to control the heat exchange in the first and second heat exchangers 152 and 170 by controlling flow rates and residence times, temperatures, pressures, and other properties of the fuel 114 and steam 116 exchanging heat therein, thereby controlling temperatures of the heated fuel and the cooled steam within temperature thresholds (e.g., upper and lower temperature thresholds).

As shown, the first heat exchanger 152 receives the steam 116 from the energy recovery system 14. The steam 116 may be received (e.g., extracted, bled or siphoned) from one or more extraction locations in the steam turbine system 64 and/or the HRSG 66. In the illustrated embodiment, the steam 116 is received from an extraction location along the cross-over line 154 fluidly coupled to the LP steam turbine 86 and the IP steam turbine 84. Additionally or alternatively, the steam 116 may be received from one or more additional locations throughout the HRSG 66 and/or the steam turbine system 64, such as described in detail above with reference to FIGS. 2 and 3. The first heat exchanger 152 also receives a portion of the feedwater 87 from the first line 89, which is configured to transfer the feedwater 87 from the pump 85 to the HP economizer 73. In certain embodiments, the first heat exchanger 152 may be configured to receive the portion of the feedwater 87 from one or more extraction locations throughout the HRSG 66 and/or the steam turbine system 64, and thus the illustrated extraction location is not intended to be limiting.

In the illustrated embodiment, the first heat exchanger 152 places the feedwater 87 in a first heat exchange relationship with the steam 116 to produce a first-stage heated feedwater 200 (e.g., first heated feedwater) and the cooled steam 119. That is, heat is transferred from the steam 116 to the feedwater 87. As shown, the first heat exchanger 152 sends the first-stage heated feedwater 200 to the second heat exchanger 170. The first heat exchanger 152 also sends the cooled steam 119 to the carbon capture system 100.

In the illustrated embodiment, the second heat exchanger 170 receives the first-stage heated feedwater 200 from the first heat exchanger 152. The second heat exchanger 170 also receives the fuel 114 from the fuel source 115. The fuel 114 may include natural gas, liquid natural gas, hydrogen blends, syngas, methane, or a combination thereof. It may be recognized that the first-stage heated feedwater 200 transfer heat from the first heat exchanger 152 to the second heat exchanger 170.

The second heat exchanger 170 places the first-stage heated feedwater 200 in a second heat exchange relationship with the fuel 114 to produce a heated fuel 118 and a cooled feedwater 202. As shown, the second heat exchanger 170 sends the heated fuel 118 to the gas turbine system 12 (e.g., combustors 54) and/or the duct burners 83. In certain embodiments, the heated fuel 118 may be sent to the combustors 54 and/or one or more injection locations of the gas turbine system 12 (e.g., for reheating the combustion gases). The second heat exchanger 170 also sends the cooled feedwater 202 to the LP drum 79. The flow rate of the cooled feedwater 202 to the LP drum 79 may be controlled by a valve 204. In certain embodiments, the second heat exchanger 170 may heat the fuel 114 to a temperature equal to or greater than 290, 295, 300, 305, or 310 degrees Celsius. Additionally, the first heat exchanger 152 may cool the steam 116 to a temperature suitable for the desorption mode in the carbon capture system 100, such as 100 to 150 degrees Celsius, 110 to 150 degrees Celsius, 120 to 150 degrees Celsius, or 130 to 150 degrees Celsius.

It may be appreciated that any combination of the configurations described in FIGS. 1-4 may be used for the fuel heating system 16. For example, the fuel heating system 16 may include a first portion having a single heat exchanger 150 as described in FIG. 2 and also a second portion having dual heat exchangers 150 as described in FIGS. 3 and 4. Furthermore, although the illustrated embodiments show the fuel heating system 16 having one or two heat exchangers, it may be recognized that the fuel system may include more than two heat exchangers. For example, the fuel heating system may include 3, 4, 5, 6, 7, or more heat exchangers.

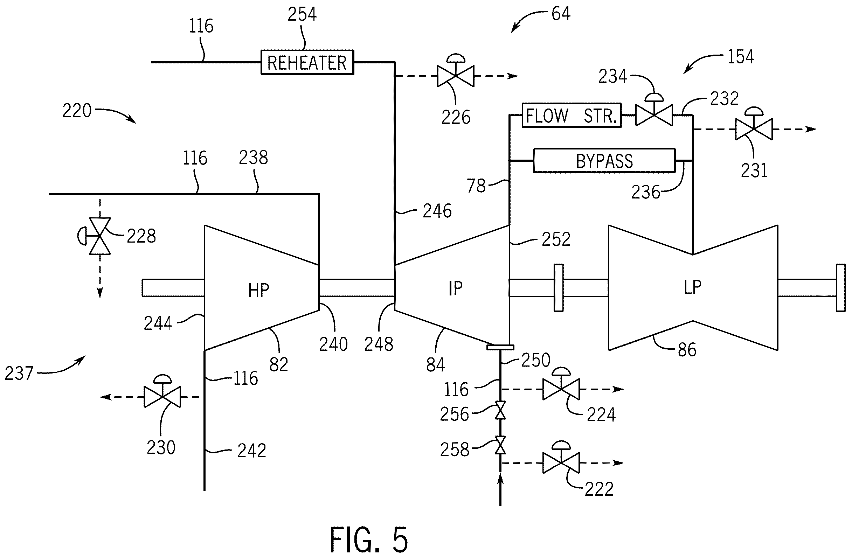

FIG. 5 is a block diagram of an embodiment of the steam turbine system 64 having a plurality of tap-off valves 220 (e.g., tap-off valves 222, 224, 226, 228, 230, and 231) for transferring steam to the fuel heating system 16. In the illustrated embodiment, the steam turbine system 64 includes the HP steam turbine 82, the IP steam turbine 84, and the LP steam turbine 86. As shown, the steam turbine system 64 includes the cross-over line 154 fluidly coupled to the LP steam turbine 86 and the IP steam turbine 84. In the illustrated embodiment, the IP steam 78 flows from the IP steam turbine 84 to the LP steam turbine 86 through the cross-over line 154. As shown, the cross-over line 154 includes a flow line 232 (e.g., fluid conduit) having a butterfly valve 234, and a bypass line 236 (e.g., fluid conduit) in parallel with the flow line 232.

In the illustrated embodiment, the steam turbine system 64 also includes lines 237 (e.g., fluid conduits) that transport steam 116 to and/or from the steam turbine system 64. The lines 237 include an HP inlet line 238 fluidly coupled to an HP inlet portion 240 of the HP steam turbine 82, and an HP outline line 242 fluidly coupled to an HP outlet portion 244 of the HP steam turbine 82. As shown, the lines 237 also include an IP inlet line 246 fluidly coupled to an IP inlet portion 248 of the IP steam turbine 84, and an IP outlet line 250 fluidly coupled to an IP outlet portion 252 of the IP steam turbine 84. The IP inlet line 246 includes a reheater 254, and the IP outlet line 250 includes a first flow control valve 256 and a second flow control valve 258. In certain embodiments, the HP outlet line 242 may be fluidly coupled to the reheater 254 disposed on the IP inlet line 246.

As shown, the tap-off valves 230 are disposed on the lines 237. The first tap-off valve 222 is disposed upstream (e.g., steam 116 flowing into the IP steam turbine 84) of the first flow control valve 256 and the second flow control valve 258. The second tap-off valve 224 is disposed downstream (e.g., steam 116 flowing into the IP steam turbine 84) of the first flow control valve 256 and the second flow control valve 258. The third tap-off valve 226 is disposed downstream (e.g., steam 116 flowing into the IP steam turbine 84) of the reheater 254. The fourth tap-off valve 228 is disposed on the HP inlet line 238 and a fifth tap-off valve 230 is disposed on the HP outlet line 242. A sixth tap-off valve 231 is fluidly coupled to the cross-over line 154.

In certain embodiments, the controller 22 may selectively control the tap-off valves 230 based on an operating condition of the operating parameter of the gas turbine system 12. For example, in response to the gas turbine system 12 is operating at full load, the controller 22 may extract the steam 116 from the cross-over line 154. Additionally or alternatively, in response to the gas turbine system 12 operating at part load, the controller 22 may extract the steam 116 from any combination of the tap-off valves 230. In certain embodiments, the controller 22 may control the butterfly valve 234 and/or the tap-off valves 230 in order to control a pressure of the steam 116. It may be appreciated that any combination of the tap-off valves 230 may be used for transferring the steam 116 to the fuel heating system 16. Additionally, it may be recognized that the tap-off valves 230 described herein may be used in combination with any of the fuel heating system 16 configurations described in FIGS. 1-4. In certain embodiments, the controller 22 may be configured to control one or more valves to extract and deliver steam to the fuel heating system 16 from any of the steam sections 70, 72, and 74 of the HRSG 66 and any of the steam turbines 82, 84, and 96 of the steam turbine system 64 at suitable steam pressures (e.g., IP, LP, and/or HP steam) depending on operating conditions of the gas turbine system 12 (e.g., startup, full load, part load, shut down, etc.), temperature thresholds for the fuel temperature, temperature thresholds for the steam supplied to the carbon capture system 100, or any combination thereof.

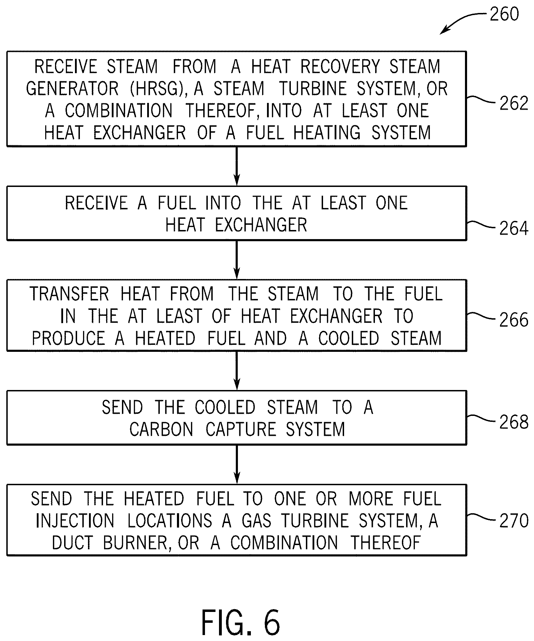

FIG. 6 is a flowchart of an embodiment of a process 260 of operating the fuel heating system 16. The process 260 may be performed by a computing device or controller (e.g., controller 22) disclosed above with reference to FIGS. 1-4 or any other suitable computing device(s) or controller(s). Furthermore, the blocks of the process 260 may be performed in the order disclosed herein or in any other suitable order. For example, certain blocks of the process 260 may be performed concurrently. In addition, in certain embodiments, at least one of the blocks of the process 260 may be omitted.

In block 262 of the process 260, the fuel heating system 16 may receive steam from the HRSG 66, the steam turbine system 64, or a combination thereof. As described herein, the steam may be received from a cross-over line between the LP steam turbine and the IP steam turbine, one or more locations of the one or more tap-off valves, and/or from the HRSG 66.

In block 264 of the process 260, the fuel heating system 16 may receive a fuel. In certain embodiments, the fuel may be received from a fuel source (e.g., tank, pipeline, etc.). As discussed herein, the fuel may include natural gas, liquid natural gas, hydrogen blends, syngas, methane, or a combination thereof.

In block 266 of the process 260, the fuel heating system 16 may transfer heat from the steam to the fuel to produce a heated fuel and a cooled steam. In certain embodiments, the fuel heating system 16 may transfer heat from the steam to the fuel using one or more heat exchangers. In certain embodiments, two or more heat exchangers may be arranged in a series configuration, or may be arranged in a parallel configuration relative to a flow of the fuel and the steam. In certain embodiments, a buffer fluid (e.g., feedwater) may be used for transferring heat between two or more heat exchangers arranged in parallel.

In the block 268 of the process 260, the fuel heating system 16 sends the cooled steam to a carbon capture system 100. In certain embodiments, the cooled steam may be used to sweep one or more vessels containing sorbent material of the carbon capture system 100. In certain embodiments, one or more sensors may monitor a pressure, temperature, and/or flowrate of the cooled steam entering the carbon capture system 100 and send a signal to the controller 22 indicative of the monitored pressure, temperature, and/or flowrate.

In the block 270 of the process 260, the fuel heating system 16 sends the heated fuel to a gas turbine system 12, a duct burner 83, or a combination thereof. In certain embodiments, the fuel is sent to the combustors of the gas turbine system 12. In certain embodiments, the fuel heating system 16 may heat the fuel to a temperature equal to or greater than 290, 295, 300, 305, or 310 degrees Celsius.

Technical effects of the disclosed embodiments include utilizing steam from a steam turbine system, an HRSG, or a combination thereof, to heat a fuel used for a gas turbine system and concurrently sweep a carbon capture system. Thus, the disclosed embodiments provide heat integration (e.g., heat transfer) between the fuel heating system and the carbon capture system via the steam, wherein the steam serves as a heat source in the carbon capture system, and the fuel heating system transfers heat away from the steam to both heat the fuel and also cool the steam suitable for the carbon capture system. In this way, the fuel heating system (e.g., via one or more heat exchangers) may eliminate a steam attemperator that would otherwise be used to attemperate the steam prior to the carbon capture system, such as by discharging the heat to the environment (e.g., waste heat). Instead, the fuel heating system uses that otherwise wasted heat to heat the fuel for the gas turbine system and/or the duct burner, while cooling the steam for the carbon capture system. In this manner, the disclosed embodiments eliminate components and costs (e.g., steam attemperator) and increase efficiency of the industrial plant. Additionally or alternatively, the efficiency of the carbon capture system may be increased by at least 0.1% at baseload operation. Additionally, the disclosed embodiments may be implemented in new combined cycle power plants and/or retrofitted to existing combined cycle power plants.

The subject matter described in detail above may be defined by one or more clauses, as set forth below.

According to a first aspect, a system includes a fuel heating system having a first heat exchanger. The first heat exchanger is fluidly coupled to a steam turbine system, a gas turbine system, a carbon capture system, and a heat recovery steam generator (HRSG). The first heat exchanger is configured to receive steam from the HRSG, the steam turbine system, or a combination thereof. The first heat exchanger is also configured to receive a fuel. The first heat exchanger is also configured to place the steam in a first heat exchange relationship with the fuel to produce a first heated fuel and a first cooled steam. The first heat exchanger is also configured to send the first cooled steam to the carbon capture system. The first heat exchanger is also configured to send the first heated fuel to one or more fuel injection locations of the gas turbine system, a duct burner of the HRSG, or a combination thereof. The system of the preceding clause, wherein the first heat exchanger is configured to receive the steam from a cross-over line between an intermediate pressure steam turbine of the steam turbine system and a low pressure steam turbine of the steam turbine system.

The system of any preceding clause, wherein the fuel heating system includes a second heat exchanger fluidly coupled to the first heat exchanger, the gas turbine system, the duct burner, the HRSG, or a combination thereof.

The system of any preceding clause, wherein the second heat exchanger is configured to receive the first cooled steam from the first heat exchanger; receive the first heated fuel from the first heat exchanger; place the first cooled steam in a second heat exchange relationship with the first heated fuel to produce a second heated fuel and a second cooled steam; send the second cooled steam to the carbon capture system; and send the second heated fuel to the gas turbine system, the duct burner, or the combination thereof.

The system of any preceding clause, wherein the first heat exchanger is configured to receive feedwater from a low pressure drum of the HRSG; receive the steam the HRSG, the steam turbine system, or the combination thereof; place the steam in a second heat exchange relationship with the feedwater to produce a first heated feedwater and a second cooled steam; send the first heated feedwater to the second heat exchanger; and send the second cooled steam to the carbon capture system.

The system of any preceding clause, wherein the second heat exchanger is configured to receive the first heated feedwater from the first heat exchanger; receive the fuel; place the first heated feedwater in a third heat exchange relationship with the fuel to produce a second heated feedwater and a second heated fuel; send the second heated feedwater to the low pressure drum; and send the second heated fuel to the gas turbine system, the duct burner, or the combination thereof.

The system of any preceding clause, including a pump configured to transfer, via a first line, the feedwater from the low pressure drum to a high pressure economizer of the HRSG; and transfer, via a second line, the feedwater from the low pressure drum to an intermediate pressure economizer of the HRSG.

The system of any preceding clause, wherein the first heat exchanger is configured to receive the feedwater from the first line.

The system of any preceding clause, including a controller having a memory and a processor, wherein the controller is configured to control one or more actuators to cause the steam to flow from the cross-over line to the first heat exchanger in response to the gas turbine operating at a full load; control the one or more actuators to cause the steam to flow from one or more lines coupled to a high pressure steam turbine of the steam turbine, the intermediate pressure steam turbine, or a combination thereof in response to the gas turbine operating at a part load; or a combination thereof.

The system of any preceding clause, wherein the one or more lines include a first inlet line coupled to an inlet portion of the high pressure steam turbine; a first outlet line coupled to an outlet portion of the high pressure steam turbine; a second inlet line coupled to an inlet portion of the intermediate pressure steam turbine; a second outlet line coupled to an outlet portion of the intermediate pressure steam turbine; or a combination thereof.

The system of any preceding clause, wherein the first outlet line is configured to transfer the steam from the high pressure steam turbine to a reheater, and the second inlet line is configured to transfer the steam from the reheater to the intermediate pressure steam turbine.

The system of any preceding clause, wherein the first inlet line, the first outline, the second inlet line, the second outlet line, or the combination thereof includes one or more valves configured to regulate flow of the steam to the first heat exchanger, wherein the controller is configured to selectively actuate the one or more valves.

The system of any preceding clause, wherein the first heat exchanger is configured to selectively receive the steam from a plurality of extraction locations via a plurality of valves controlled by a controller, wherein the plurality of extraction locations include at least three of a low pressure section of the HRSG, an intermediate pressure section of the HRSG, a high pressure section of the HRSG, a low pressure steam turbine, an intermediate pressure steam turbine, a high pressure steam turbine, a crossover line between steam turbines of the steam turbine system, or any combination thereof.

According to a second aspect, a system includes a gas turbine system, a heat recovery steam generator (HRSG), a steam turbine system, a carbon capture system, and a fuel heating system. The fuel heating system includes a first heat exchanger. The first heat exchanger is configured to receive steam from the HRSG, the steam turbine system, or a combination thereof. The first heat exchanger is also configured to receive a fuel. The first heat exchanger is also configured to transfer heat from the steam to the fuel to produce a first heated fuel and a first cooled steam. The first heat exchanger is also configured to send the first cooled steam to the carbon capture system. The first heat exchanger is also configured to send the first heated fuel to one or more fuel injections locations of the gas turbine system, a duct burner of the HRSG, or a combination thereof.

The system of the preceding clause, wherein the first heat exchanger is configured to receive the steam from a cross-over line between an intermediate pressure steam turbine of the steam turbine system and a low pressure steam turbine of the steam turbine system.

The system of any preceding clause, wherein the fuel heating system includes a second heat exchanger fluidly coupled to the first heat exchanger, the gas turbine system, the duct burner, or a combination thereof.

The system of any preceding clause, wherein the second heat exchanger is configured to receive the first cooled steam from the first heat exchanger; receive the first heated fuel from the first heat exchanger; place the first cooled steam in a second heat exchange relationship with the first heated fuel to produce a second heated fuel and a second cooled steam; send the second cooled steam to the carbon capture system; and send the second heated fuel to the gas turbine system, a duct burner, or a combination thereof.

The system of any preceding clause, wherein the first heat exchanger is configured to receive feedwater from a low pressure drum of the HRSG; receive the steam from a cross-over line between an intermediate pressure steam turbine of the steam turbine system and the low pressure steam turbine of the steam turbine system; place the steam in a second heat exchange relationship with the feedwater to produce a first heated feedwater and a second cooled steam; send the first heated feedwater to the second heat exchanger; and send the second cooled steam to the carbon capture system.

According to a third aspect, a method includes receiving steam from a heat recovery steam generator (HRSG), a steam turbine system, or a combination thereof, into at least one heat exchanger of a fuel heating system. The method also includes receiving a fuel into the at least one heat exchanger. The method also includes transferring heat from the steam to the fuel in the at least one heat exchanger to produce a heated fuel and a cooled steam. The method also includes sending the cooled steam to a carbon capture system. The method also includes sending the heated fuel to one or more fuel injection locations of a gas turbine system, a duct burner of the HRSG, or a combination thereof.

The method of the preceding clause, including capturing a carbon dioxide (CO₂) from air and/or an exhaust gas from the gas turbine system, wherein capturing includes using the cooled steam during a desorption mode of the carbon capture system.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A system, comprising:
a fuel heating system comprising a first heat exchanger, wherein the first heat exchanger is fluidly coupled to a steam turbine system, a gas turbine system, a carbon capture system, and a heat recovery steam generator (HRSG), wherein the first heat exchanger is configured to:
receive steam from the HRSG, the steam turbine system, or a combination thereof;
receive a fuel;
place the steam in a first heat exchange relationship with the fuel to produce a first heated fuel and a first cooled steam;
send the first cooled steam to the carbon capture system; and
send the first heated fuel to one or more fuel injection locations of the gas turbine system, a duct burner of the HRSG, or a combination thereof.

2. The system of claim 1, wherein the first heat exchanger is configured to receive the steam from a cross-over line between an intermediate pressure steam turbine of the steam turbine system and a low pressure steam turbine of the steam turbine system.

3. The system of claim 1, wherein the fuel heating system comprises a second heat exchanger fluidly coupled to the first heat exchanger, the gas turbine system, the duct burner, the HRSG, or a combination thereof.

4. The system of claim 3, wherein the second heat exchanger is configured to:
receive the first cooled steam from the first heat exchanger;
receive the first heated fuel from the first heat exchanger;
place the first cooled steam in a second heat exchange relationship with the first heated fuel to produce a second heated fuel and a second cooled steam;
send the second cooled steam to the carbon capture system; and
send the second heated fuel to the gas turbine system, the duct burner, or the combination thereof.

5. The system of claim 3, wherein the first heat exchanger is configured to:
receive feedwater from a low pressure drum of the HRSG;
receive the steam the HRSG, the steam turbine system, or the combination thereof;
place the steam in a second heat exchange relationship with the feedwater to produce a first heated feedwater and a second cooled steam;
send the first heated feedwater to the second heat exchanger; and
send the second cooled steam to the carbon capture system.

6. The system of claim 5, wherein the second heat exchanger is configured to:
receive the first heated feedwater from the first heat exchanger;
receive the fuel;
place the first heated feedwater in a third heat exchange relationship with the fuel to produce a second heated feedwater and a second heated fuel;
send the second heated feedwater to the low pressure drum; and
send the second heated fuel to the gas turbine system, the duct burner, or the combination thereof.

7. The system of claim 5, comprising a pump configured to:
transfer, via a first line, the feedwater from the low pressure drum to a high pressure economizer of the HRSG; and
transfer, via a second line, the feedwater from the low pressure drum to an intermediate pressure economizer of the HRSG.

8. The system of claim 7, wherein the first heat exchanger is configured to receive the feedwater from the first line.

9. The system of claim 2, comprising one or more lines coupled to a high pressure steam turbine of the steam turbine, the intermediate pressure steam turbine, or a combination thereof, wherein the one or more lines comprise:
a first inlet line coupled to an inlet portion of the high pressure steam turbine;
a first outlet line coupled to an outlet portion of the high pressure steam turbine;
a second inlet line coupled to an inlet portion of the intermediate pressure steam turbine;
a second outlet line coupled to an outlet portion of the intermediate pressure steam turbine;
or a combination thereof.

10. The system of claim 9, wherein the first outlet line is configured to transfer the steam from the high pressure steam turbine to a reheater, and the second inlet line is configured to transfer the steam from the reheater to the intermediate pressure steam turbine.

11. The system of claim 9, comprising a controller having a memory and a processor, wherein the first inlet line, the first outlet line, the second inlet line, the second outlet line, or the combination thereof, comprises one or more valves configured to regulate flow of the steam to the first heat exchanger, wherein the controller is configured to selectively actuate the one or more valves.

12. The system of claim 1, wherein the first heat exchanger is configured to selectively receive the steam from a plurality of extraction locations via a plurality of valves controlled by a controller, wherein the plurality of extraction locations comprise at least three of a low pressure section of the HRSG, an intermediate pressure section of the HRSG, a high pressure section of the HRSG, a low pressure steam turbine, an intermediate pressure steam turbine, a high pressure steam turbine, a crossover line between steam turbines of the steam turbine system, or any combination thereof.

13. A method, comprising:
receiving steam from a heat recovery steam generator (HRSG), a steam turbine system, or a combination thereof, into at least one heat exchanger of a fuel heating system;
receiving a fuel into the at least one heat exchanger;
transferring heat from the steam to the fuel in the at least one heat exchanger to produce a heated fuel and a cooled steam;
sending the cooled steam to a carbon capture system; and
sending the heated fuel to one or more fuel injection locations of a gas turbine system, a duct burner of the HRSG, or a combination thereof.

14. The method of claim 13, comprising capturing a carbon dioxide (CO₂) from air and/or an exhaust gas from the gas turbine system, wherein capturing comprises using the cooled steam during a desorption mode of the carbon capture system.

15. The system of claim 11, wherein the controller is configured to:
control the one or more valves to cause the steam to flow from the cross-over line to the first heat exchanger in response to the gas turbine operating at a full load;
control the one or more valves to cause the steam to flow from the one or more lines in response to the gas turbine operating at a part load;
or a combination thereof.
